# EUROPEAN PATENT SPECIFICATION

(11) **EP 1 446 368 B1**
(45) Date of publication and mention of the grant of the patent: **24.01.2007**
(21) Application number: 02791665.9
(22) Date of filing: 04.11.2002
(51) Int. Cl.: C04B 40/06, B28C 7/06, C09K 3/10

(54) **METHOD OF TINTING A JOINT FILLER FOR TILED SURFACES**
VERFAHREN ZUR FÄRBUNG VON FUGENFÜLLER FÜR GEFLIESTEN FLÄCHEN
PROCEDE POUR COLORER LE CORPS DE JOINT POUR SURFACES A CARREAUX

(30) Priority: 14.11.2001 EP 01204354
(43) Date of publication of application: 18.08.2004
(73) Proprietor: Akzo Nobel Coatings International B.V., 6824 BM Arnhem (NL)
(72) Inventor: BOSSE, Rüdiger, 48282 Emsdetten (DE)
(74) Representative: Schalkwijk, Pieter Cornelis
(86) International application number: PCT/EP2002/012324
(87) International publication number: WO 2003/042126

(56) References cited:
- EP-A- 0 546 699
- DE-U- 9 318 666
- GB-A- 2 360 039
- US-A- 4 961 790
- US-A- 5 362 322
- US-A- 5 558 708
- US-A- 5 846 315

## Description

The present invention relates to a method of tinting a joint filler for filling joints in a tiled surface.

After applying tiles on a surface by means of an adhesive, the joints between the tiles are filled with a joint filler. Generally, the joint filler is a dry mortar, typically in a grey or white colour, which is mixed with water before application.

For decorative reasons, it is desirable to colour the joints. Traditionally, the colouring of joint filler material is done by using pigment pastes, which are mixed with the joint filler together with the water. Such pastes are available in a large number of different colours. To obtain a desired colour, the right paste or mixture of pastes has to be selected and added in the right amount. After using up the prepared amount of coloured joint filler, it may be necessary to prepare a fresh amount of coloured joint filler for finishing the job. In such cases, it is almost impossibly difficult for a tiler who can merely visually estimate the amount of pigment paste needed to reproduce the same colour exactly. A further problem is the poor compatibility of such pigment pastes with many cementitious joint filler compositions.

To overcome these problems, ready-made pre-mixed coloured joint fillers are marketed. Pigment powders are added during the production of the joint filler mortars. This way, a product with a constant colour is produced. However, since it requires a large number of small production quantities, production costs are increased considerably. Moreover, it requires strict cleaning procedures to avoid cross-contamination of differently coloured production batches. To minimize these additional production costs, the number of different colours available is limited.

The object of the invention is to provide a system allowing maximum freedom of selection as regards colour and shade when preparing a joint filler composition in an easily reproducible way.

The object of the invention is achieved by a method comprising the following steps:
- Providing a modular set of capsules containing predefined amounts of colourants and a pre-packed base composition in powder form comprising one or more hydraulic binders;
- Selecting one or more capsules for admixture with the base mortar to obtain an intended colour;
- Releasing the colourants by manually mixing the selected capsules with at least a portion of the base composition and water.

Since the capsules contain predefined amounts of colourant, the colourants can be easily dosed in a repeatable manner, allowing exact reproduction when a fresh amount of joint filler has to be prepared in the same colour.

In this respect, a modular set is to be understood as a set of standard units that can be combined to obtain a desired result.

Capsuled additives for cementitious compositions are disclosed in EP-A 0 546 699, which relates to one or two capsules of a fluid additive being mixed with large batches of cement compositions. No modular tinting system allowing adjustment, fine-tuning, or the exact reproduction of colour of a joint filler composition is disclosed. US 4,961,790 discloses the use of a water-soluble container for admixing an additive with a large batch of concrete using wet mixers.

In the system according to the present invention, a single size may be used for all capsules, all including the same amount of colourants. Alternatively, two or more sizes may be used which contain colourants in different amounts varying in a specified modular ratio.

Prescribed formulations or recipes may be used by the tiler if so desired to obtain pre-defined colours. A menu comprising a range of colours and corresponding formulations using the modular set of capsules can be enclosed, for instance in the packaging of the base composition and/or the packaging of a set of capsules.

For an easy release of the colourants when mixing the capsules with the base composition and water, the capsule is preferably made of a water-soluble material, e.g., polyvinyl acetal, polyvinyl alcohol, or a water-soluble gelatin. Optionally, the water-soluble material may comprise glycols, such as propylene glycol or polyethylene glycol, as a plasticizer. Further additives, such as starch, preservatives or surfactants, can also be used if so required. The capsule material can be soft and flexible and should preferably be transparent to show the colour of the pigments it contains.

The capsule preferably consists of a single piece. This can for example take the form of a capsule comprising two parts sealed together enclosing an inner space, e.g., a capsule quite similar to the usual paint ball capsules as used in paint ball games. Generally, the capsule according to the present invention will be more or less spherical, elliptical or oval, or have the shape of a cushion or pillow, just as the pads which are generally used for, e.g., washing powders. Differently shaped capsules can also be used if so required.

The capsules can be part of a modular set of admixtures for the preparation of a joint filler for filling joints in tiled surfaces, optionally in combination with a prepacked base composition. Such a modular set can for example comprise a number of capsules comprising a pigment of a first base colour, a number of capsules comprising a pigment of a second base colour, and, optionally, a number of further capsules comprising further base colours. Optionally, the set may also comprise capsules comprising non-colourant additives, e.g., effect pigments, fungicides, biocides, plasticizers, and the like.

The colourants can be any suitable pigment or dye or combination of pigments or dyes. Examples of suitable inorganic pigments include titanium dioxide, zinc oxide, carbon black, iron oxides, bismuth vanadates, raw and burnt sienna or umber, cadmium pigments, chromium pigments, etc. Examples of organic pigments include phthalocyanines, quinacridones, quinophthalones, anthraquinones, isoindolines, pyranthrones, indanthrones, derivatives of dioxazine, diketopyrrolopyrroles, azo-compounds, etc.

Joint fillers are generally marketed in an amount of the order of about 5 - 25 kilos. To tint such amounts of base composition allowing a large range of shades and nuances, a suitable amount of colourant weighed into a capsule would for instance be of the order of 30 - 80 grams per capsule, but can be more or less if so required. As a non-limiting example, capsules of 15 - 30 cm³, preferably 20 - 25 cm³, are suitable for use in most cases.

The base composition to be coloured is based on an organic or inorganic binder. Suitable binders are for instance cementitious compounds, such as Portland cement (e.g., CEM I, CEM II, CEM III according to European industrial standard EN' 197) or calcium aluminate cements. Besides the binder or binders, the base composition may comprise a polymer powder, e.g., vinyl acetate, vinyl acetate ethylene, styrene acrylic, vinyl acetate vinyl versatate, etc. The composition may also comprise fillers, such as sand, or carbonate fillers and/or additives, such as fungicides, biocides, calcium sulfate, setting retarders, accelerators, e.g., calcium formate, water reducers, plasticizers, air entrainers, and the like. Titanium dioxide may be used if it is desired to have a white base composition.

The invention is further described and illustrated by the accompanying drawings, which show perspective views of two capsule according to the present invention.

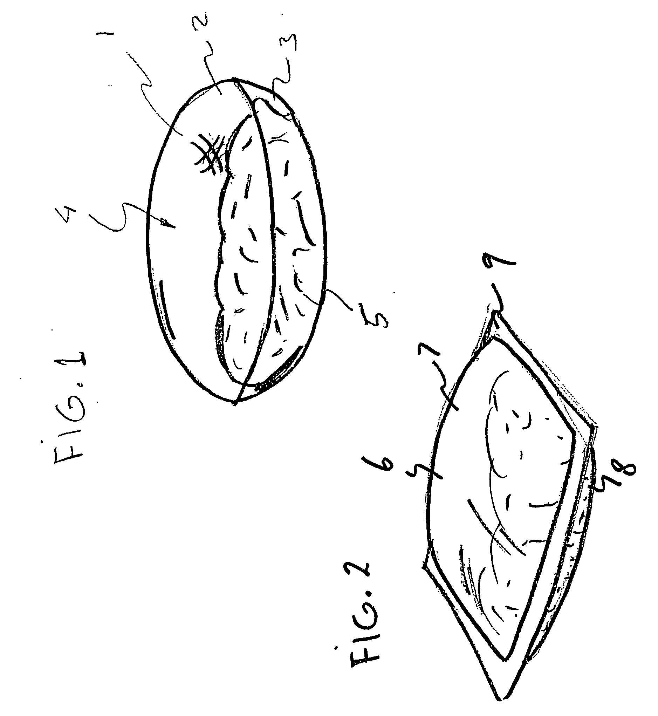

Figure 1 shows a substantially spherical capsule 1 of water-soluble polyvinyl acetal.

The capsule 1 consist of a single piece built up of two semi-spherical halves 2, 3, which are sealed together at their open sides, thus enclosing a space 4 containing an amount of a colourant 5 of a specific colour. When the capsule 1 is mixed with a joint filler composition and water, the capsule 1 solves in the water and the colourant colours the joint filler.

An example of a modular set for tinting a joint filler based on white Portland cement includes, per base colour, a number of capsules each containing about 50 grams of colourant. The set could for example comprise 5 capsules comprising carbon black, 15 capsules comprising titanium dioxide, and 10 capsules of red pigment (e.g., red iron oxide), blue pigment (e.g., phthalocyanine blue) and yellow pigment (e.g., yellow iron oxide), respectively.

Figure 2 shows another embodiment of a capsule 6 according to the invention. The capsule 6 has the shape of a pillow or cushion and has an upper half 7 and a lower half 8 which are joint together at edge 9. The capsule is made of a soft, transparent material, comparable to pads generally used for packing washing powder.

## Claims

1. Method of preparing a joint filler for filling joints in a tiled surface, the method comprising the following steps:
• Providing a modular set of capsules containing colourants of a number of colours and a prepacked base composition in powder form comprising one or more hydraulic binders;
• Selecting one or more capsules for admixture with the base mortar to obtain an intended colour;
• Manually mixing the selected capsules with at least a portion of the base composition and water.

2. Method according to the preceding claim, **characterized in that** selection of the capsules to be mixed is done in accordance with a prescribed formula corresponding to the intended colour.

3. Modular set of admixtures for the preparation of a joint filler for filling joints in tiled surfaces including a pre-packed base composition and a set of capsules containing colourants for colouring the joint filler.

## Patentansprüche

1. Verfahren zur Herstellung eines Fugenfüllers zum Füllen von Fugen in einer gefliesten Oberfläche, wobei das Verfahren die folgenden Schritte umfasst:
• Bereitstellen eines modularen Satzes von Kapseln, die Färbemittel einer Anzahl von Farben enthalten, und einer vorgepackten Grundzusammensetzung in Pulverform, die ein oder mehrere hydraulische Bindemittel umfasst;
• Auswählen von einer oder mehreren Kapseln zum Mischen mit dem Grundmörtel zum Erhalten einer gewünschten Farbe;
• manuelles Mischen der ausgewählten Kapseln mit wenigstens einem Teil der Grundzusammensetzung und Wasser.

2. Verfahren gemäß dem vorstehenden Anspruch, **dadurch gekennzeichnet, dass** die Auswahl der zu mischenden Kapseln gemäß einer vorgeschriebenen Rezeptur erfolgt, die der gewünschten Farbe entspricht.

3. Modularer Satz von Mischungskomponenten zur Herstellung eines Fugenfüllers zum Füllen von Fugen in gefliesten Oberflächen, umfassend eine vorgepackte Grundzusammensetzung und einen Satz von Kapseln, die Färbemittel zum Färben des Fugenfüllers enthalten.

## Revendications

1. Procédé de préparation d'un produit de remplissage pour joints destiné à remplir des joints dans une surface carrelée, le procédé comprenant les étapes suivantes consistant à :
• mettre à disposition un ensemble modulaire de capsules contenant des colorants d'un certain nombre de couleurs et une composition de base préemballée sous forme de poudre comprenant un ou plusieurs liants hydrauliques ;
• sélectionner une ou plusieurs capsules pour une addition au mortier de base afin d'obtenir une couleur prévue ;
• mélanger manuellement les capsules sélectionnées avec au moins une partie de la composition de base et de l'eau.

2. Procédé selon la revendication précédente, **caractérisé en ce que** la sélection des capsules à mélanger est effectuée conformément à une formule recommandée correspondant à la couleur prévue.

3. Ensemble modulaire d'additions pour la préparation d'un produit de remplissage pour joints destiné à remplir des joints dans des surfaces carrelées comprenant une composition de base préemballée et un ensemble de capsules contenant des colorants pour colorer le produit de remplissage pour joints.
